# EUROPÄISCHE PATENTSCHRIFT

(11) **EP 0 628 245 B1**
(45) Veröffentlichungstag und Bekanntmachung des Hinweises auf die Patenterteilung: **14.08.1996**
(21) Anmeldenummer: 94107736.4
(22) Anmeldetag: 19.05.1994
(51) Int. Cl.: A01K 5/00, A01F 29/00

(54) **Futterverteiler mit einer Verteilwalze als Schlepper-Anbaugerät**
Tractormounted feed distributor with a divider roller
Distributeur d'alimentation avec rouleau diviseur, destiné à être monté sur un tracteur

(30) Priorität: 09.06.1993 DE 4319223
(43) Veröffentlichungstag der Anmeldung: 14.12.1994
(73) Patentinhaber: Reck, Anton, 88422 Betzenweiler (DE)
(72) Erfinder: Reck, Anton, 88422 Betzenweiler (DE)
(74) Vertreter: Patentanwälte Eisele, Otten & Roth

(56) Entgegenhaltungen:
- DE-A- 3 236 862
- DE-A- 4 135 251
- DE-C- 3 725 690
- DE-U- 9 114 962

## Beschreibung

Die Erfindung betrifft einen Futterverteiler mit einem an der Dreipunktaufhängung eines Schleppers anbringbaren Anbaugestell und einer an diesem mittig gelagerten, aus zwei mit Leitschaufeln besetzten Trommeln bestehenden horizontalen Verteilwalze.

Ein bekannter Futterverteiler dieser Art wird unter der Bezeichnung REMA SVI angeboten (Hersteller: SOMMER + Reisacher Maschinenbau, Reicholzried). Es sind zwölf Leitschaufeln pro Trommel vorgesehen, die in Achsrichtung gesehen paarweise hintereinander angeordnet sind. Die Vorrichtung dient zum Verteilen des angefahrenen Siliergutes beim Einlagern in ein Fahrsilo.

Aus dem deutschen Patent 37 25 690 ist ein Gerät bekannt, das anstelle einer mit einzelnen Leitschaufeln besetzten Verteilwalze eine Förderschnecke aufweist. Es dient zum mittigen Teilen und beidseitigem Nach-Außen-Fördern von bahnförmig, und zwar insbesondere auf dem Futtertisch einer Stallung, abgelegtem Grünfutter. Um das Futter nach dem Verteilen sauber abräumen zu können, ist an dem die Förderschnecke tragenden Anbaugestell ein Räumschild angebracht.

Schließlich ist aus der Zeitschrift "Landmaschinenreport" Nr. 7/1993, Seite 19 ein sogenannter Dosierverteiler bekannt geworden, der in erster Linie dazu dient, einen Silageblock, der aus einem Flachsilo herausgeschnitten worden ist, abzufräsen und die dadurch zerkleinerte Silage gleichzeitig auf dem Futtertisch zu verteilen, d.h. beidseitig des Futtertischs dem Vieh vorzulegen. Hierbei wird die Verteilwalze durch zwei mit schräg verlaufenden Kratzflächen versehene Fünfecktrommeln gebildet. Der Siloblock wird mittels einer diesen umfassenden Kette nachgeschleppt bzw. beim Abfräsen festgehalten.

Normalerweise kommen alle drei geschilderten Anwendungsfälle in einem landwirtschaftlichen Betrieb vor, so daß es erstrebenswert ist, eine Vorrichtung anzugeben, welche den Anforderungen in mehreren oder allen genannten Fällen gerecht wird.

Weiterhin ist mit dem DE-U-91 14 962 eine Vorrichtung zum Verteilen von Futter bekannt geworden, die ein an der Dreipunktaufhängung eines Schleppers anbringbares Anbaugestell und eine an diesem mittig gelagerten, aus zwei mit Leitschaufeln besetzten Trommeln bestehenden horizontalen Verteilwalze aufweist. Hierbei sind die Leitschaufeln in Form mehrerer gedachter Wendelgänge auf den Trommeln so angeordnet, daß die einander entsprechenden Leitschaufeln der einzelnen Wendelgänge in Umfangsrichtung fluchten und sämtliche Leitschaufeln einer Trommel in Umfangsrichtung um die gleichen Bogenabstände gegeneinander versetzt sind.

Diese Vorrichtung weist jedoch gravierende Nachteile auf, falls eine Traggabel für einen Silageblock bei Bedarf unterhalb der Verteilwalze angeordnet werden soll. Bei der Vorrichtung nach dem Stand der Technik kann die Verteilwalze nur bis oberhalb der Zinken einer solchen Traggabel abgesenkt werden. Eine flache Schicht des Silageblocks verbleibt somit auf der in die Silage eingreifenden Traggabel.

Aufgabe der Erfindung ist es daher, einen Futterverteiler vorzuschlagen, bei dem bei Bedarf eine Traggabel für einen Silageblock unterhalb der Verteilwalze angebracht werden kann, wobei jedoch auch der letzte Rest des Silageblockes und insbesondere das zwischen den Gabelzinken befindliche Futter ebenfalls verteilt werden soll.

Diese Aufgabe wird ausgehend von einem Futterverteiler der einleitend bezeichneten Art erfindungsgemäß durch die kennzeichnenden Merkmale des Anspruchs 1 gelöst.

Erfindungsgemäß wird dabei der Umriß der Leitschaufeln zweckmäßigerweise so gewählt, daß eine von der Mantelfläche der Trommel auf eine bestimmte radiale Höhe schräg ansteigende, in Drehrichtung vorauslaufende Partie und eine nachlaufende Partie zu unterscheiden ist, die durchweg die genannte Höhe hat und am Ende steil abfällt. Die obere Kante der nachlaufenden Partie ist somit in der angeschweißten Stellung der Leitschaufel einem zum Trommelmantel konzentrischen Zylinder angepaßt, der einen um die erwähnte Höhe der Leitschaufel größeren Radius als die Trommel hat.

In Verbindung mit der weiteren Ausbildung der Verteilwalze, daß die Leitschaufeln in Form mehrerer gedachter Wendelgänge auf den Trommeln so angeordnet sind, daß die einander entsprechenden Leitschaufeln der einzelnen Wendelgänge in Umfangsrichtung fluchten und daß sämtliche Leitschaufeln einer Trommel in Umfangsrichtung um die gleichen Bogenabstände gegeneinander versetzt sind, werden damit zwei verschiedene Dinge erreicht. Das Fluchten der Leitschaufeln in Umfangsrichtung hat zur Folge, daß die Partien größter radialer Höhe der Leitschaufeln mit ihren wirksamen Rändern in Bereichen bleiben, die in Achsrichtung gleichbleibende und ausreichend große Abstände haben, um dort bei Bedarf die Zinken einer Traggabel anordnen zu können. Die nachlaufenden radial höchsten Partien der Leitschaufeln greifen dann zwischen die Zinken ein bis nahezu auf den Boden, während sich die schräg ansteigenden Partien der Leitschaufeln oberhalb der Zinken drehen können. Dadurch gelingt es, beim Zerkleinern von Silageblöcken auch die am Schluß von dem Block übrig bleibende flache Matte einwandfrei zerteilen und seitlich wegfördern zu können.

Der Bogenversatz sämtlicher Schaufeln einer Trommel bewirkt ein ruhigeres Arbeiten derselben und eine Verringerung von gefährlichen Belastungsspitzen. Wenn nämlich alle erfindungsgemäß geformten Leitschaufeln an beispielsweisen sechs gleichen Umfangspositionen angebracht sind, wie bekannt, so neigt die Verteilwalze dazu, bei ihrer Drehbewegung von einer axial fluchtenden Leitschaufelgruppe zur nächsten abzusacken und dadurch möglicherweise in eine Höhenschwingung zu verfallen. Dies wird durch die gleichmäßige Verteilung der Leitschaufeln verringert. Die Verteilwalze greift damit praktisch in jeder Winkelstellung mit zwei Leitschaufeln am Silageblock bzw. dem zu verteilenden Futterstock an.

Die Leitschaufeln werden vorzugsweise aus ebenem Blech gefertigt und mit ihrer passend geschnittenen Fußkante an der Trommelmantelfläche angeschweißt.

Ein weiterer Vorschlag von besonderer praktischer Bedeutung befaßt sich mit folgendem Problem. Als Folge der mittigen Lagerung der Verteilwalze müssen die beiden Trommeln einen axialen Abstand voneinander haben, welcher mindestens so groß ist wie die Dicke des Tragarms, der die Lageranordnung der Verteilwalze hält. Üblicherweise ist der Spalt zwischen den Trommeln durch eine Ringmuffe abgedeckt. Arbeitet sich nun die Verteilwalze an einem Silageblock nach unten, so bleibt ein der Spaltbreite entsprechender Damm stehen, der insbesondere bei kurz geschnittener Silage eine erhebliche Standfestigkeit hat und das weitere Absenken der Verteilwalze verhindert, weil die Ringmuffe auf dem Damm aufsteht.

Um hier Abhilfe zu schaffen, werden zwei insbesondere gemeinsam anzuwendende Maßnahmen vorgeschlagen. Die erste besteht darin, daß die der Mitte der Verteilwalze unmittelbar benachbarten inneren Leitschaufeln mit ihrer vorauslaufenden ansteigenden Partie am Trommelrand in der Radialebene angeordnet und die nachlaufenden hohen Partien gegenüber den vorauslaufenden in Richtung der übrigen Leitschaufeln abgekantet sind. Die vorauslaufenden Leitschaufelpartien greifen somit unmittelbar an der Seitenfläche des erwähnten Dammes an und bewirken bei nicht zu kurz geschnittener Silage häufig schon für sich allein dessen Zerreißen.

Die zweite Maßnahme führt auch bei millimeterfein geschnittener und zu einem festen Kuchen verdichteter Silage zum Erfolg. Sie besteht darin, daß an der Unterseite der Lageranordnung der Verteilwalze zwischen den Trommeln ein Leitkörper angebracht ist, der eine zu einer Radialebene der Trommeln geneigte Leitfläche aufweist. Der Leitkörper kann zum Beispiel einfach ein schräges Paddel sein oder ein nach oben breiter werdender Keil. Wenn wie üblich die Lageranordnung von einer den Spalt zwischen den Trommeln abdeckenden Ringmuffe umgeben ist, so kann der Leitkörper an dieser angebracht sein. Insbesondere kann ein Ringsegment von keilförmigem Querschnitt vorgesehen sein, dessen Innenform der Außenkrümmung der Ringmuffe entspricht und diese auf einem Bogen von beispielsweise etwa 125° abdeckt. Der Leitkörper bewirkt, daß beim Absenken der Verteilwalze der zurückbleibende Damm des Silageblocks zur Seite gebrochen und dadurch in den Bereich der am gegenüberliegenden Trommelrand in der Radialebene angeordneten vorauslaufenden Leitschaufelpartien gelangt und von diesen zerkleinert und in Querrichtung wegbefördert wird.

Die beschriebenen inneren Leitschaufeln sind jedoch auch beim Verteilen von Grünfutter von Vorteil, da Sie eine hervorragende mittige Zerteilung des Futterstocks bewirken.

Ein anderer Vorschlag zum Zerkleinern des Silagedammes besteht darin, daß an den einander zugewandten Trommelenden am Trommelmantel oder den inneren Leitschaufeln Kratzzinken angebracht sind. Diese wirken bei Silage aus längerem Halmgut auch schon dann, wenn sie nicht in den Ringraum zwischen den inneren Leitschaufeln hineinragen. Andererseits ist es aber auch möglich, federnde Kratzzinken in den Ringraum hineinragen zu lassen oder hineinragende, aber ausschwenkbare Leitfinger oder -schaufeln vorzusehen und diese mittels einer Steuervorrichtung zum berührungslosen Vorbeigang am Tragarm der Verteilwalze auszulenken. Als Steuervorrichtung kommt insbesondere eine Kurvenbahn oder ein Exzenter in Betracht.

Die beschriebenen Vorrichtungen können nach Demontage des Räumschildes bzw. der Zinkengabel alle auch zum Verteilen von Silagegut beim Einlagern in ein Fahrsilo verwendet werden. Dabei kommt es auf eine sorgfältige Verdichtung durch Überfahren mit den Schlepperrädern an. Die Länge der Verteilwalze ist daher üblicherweise geringer als die Schlepperbreite. Bei der Verteilarbeit auf dem Futtertisch ist es jedoch im Gegenteil wichtig, das vorzulegende Futter nicht zu überfahren. Es wird deshalb vorgeschlagen, daß Verlängerungsschaufeln vorgesehen sind, welche an die äußeren Leitschaufeln, welche an den voneinander abgewandten Trommelendensitzen, anschraubbar sind und diese über die Schlepperbreite hinaus verlängern. Die dadurch erreichte zusätzliche Querförderung ist vorteilhafterweise unabhängig von der Fahrtrichtung.

Durch die höhenbewegliche Führung eines Räumschildes bezüglich des Anbaugestells wird der Räumschild von den auf das Anbaugestell übertragenen Höhenschwankungen des Schleppers, die durch das Eingreifen der Verteilwalze in das Futter verstärkt werden, unabhängig und behält seine Bodenberührung bei. Wird andererseits der Räumschild durch eine Traganordnung für einen Silageblock erweitert, so bleibt das erhebliche Gewicht des Silageblocks während des Abfräsens am Boden abgestützt, was für die Lenkfähigkeit des Schleppers von wesentlicher Bedeutung ist. Die Höhenbewegung der Räum- und/oder Traganordnung kann mittels eines Scharniers oder einer Rollenführung (vier Rollen in zwei Führungsschienen, die auch als Kurvenbahn ausgelegt sein können) erfolgen. Besonders vorteilhaft ist eine Führung mit Hilfe mehrerer Schwenkhebel, die im Falle einer Parallelhebelführung genau gleich lang oder auch ungleich lang sein können.

Im Falle eines Grünfutterverteilers wird vorgeschlagen, daß das Anbaugestell, an dem ein Räumschild frei höhenbeweglich geführt ist, durch auf dem Bodem laufende Rollen in seiner Bewegungsmöglichkeit nach unten begrenzt ist. Da die Verteilwalze möglichst nicht mit dem Boden in Berührung gelangen soll, kann der Schlepper, wenn der Futterverteiler am Heck angebaut ist, sich auf diese Weise am Boden abstützen und dadurch die Vorderräder belasten und lenkfähig halten.

Eine weitere Verbesserung des Räumschildes besteht darin, daß an der Vorderkante desselben eine scharnierartig auf- und abschwenkbare Räumleiste angelenkt ist.

Für den einleitend an dritter Stelle erwähnten Anwendungsfall der Silageverteilung wird vorgeschlagen, daß an dem Anbaugestell eine horizontale Silageblock-Traggabel frei höhenbeweglich geführt und durch an ihr gelagerte, auf dem Boden laufende Rollen in ihrer Bewegungsmöglichkeit nach unten begrenzt ist. Mit dieser Traggabel kann ein Silageblock aufgenommen und infolge der Rollen ohne Entlastung der Vorderräder des Schleppers mitgeführt werden. Zum Aufnehmen des Silageblocks wird das Anbaugestell mit der daran gelagerten Verteilwalze mittels der Dreipunkt-Hydraulik des Schleppers entsprechend hoch genommen und zum Abfräsen und Zerteilen des Silageblocks wieder abgesenkt.

Häufig ist bei hohen Silageblöcken ein besonders großer Hub der Verteilwalze erwünscht. Für diesen Fall wird zweckmäßigerweise vorgeschlagen, daß die Verteilwalze mittels eines gabelartigen Schwenkgestells an dem Anbaugestell auf und ab schwenkbar gelagert und mittels eines eigenen Hydraulikzylinders in eine gewünschte Schwenkstellung einstellbar ist. Dabei ergibt sich außerdem die vorteilhafte Möglichkeit, daß die Silageblock-Traggabel mittels eines Zugstrangs mit dem Schwenkgestell verbunden und dadurch beim Hochschwenken über eine bestimmte Schwenkstellung hinaus vom Boden abhebbar ist, so daß, wenn der Schlepper schwer genug und ein Kippen nicht zu befürchten ist, Silageblöcke auch von außerhalb des Stallgebäudes herbeigeholt werden können.

Um mit einer Silageblock-Traggabel auch den Futtertisch räumen zu können, wird vorgeschlagen, daß die Traggabel aus mehreren Zinken besteht, die an einem quer zur Fahrtrichtung verlaufenden Zinkenträger angeordnet sind und daß dieser als Räumschildunterteil ausgebildet ist, während ein zugehörigendes plattenförmiges Räumschildoberteil an dem Schwenkgestell befestigt ist. Das Räumschildoberteil ist eine im wesentlichen ebene Platte, die bei abgesenkter Verteilwalze vertikal hinter dieser angeordnet ist, während das Räumschildunterteil nach vorn geneigt ist und ein Stück weit unter die Verteilwalze greift. Um die Anpassung des Räumschildunterteils an eine unebene Futtertischfläche zu verbessern, wird vorgeschlagen, daß an dessen Vorderkante unter den Zinken eine scharnierartig auf und ab schwenkbare Räumleiste angelenkt ist. Dies ist zum Beispiel dann von großem Vorteil, wenn am Anfang des Futtertischs zwei Räder des Schleppers außerhalb und deshalb meist etwas tiefer stehen. Die Zinken der Traggabel sind vorzugsweise etwas abgekröpft, um für die schwenkbare Räumleiste Platz zu schaffen.

Die Lenkbarkeit des Schleppers mit angebautem Futterverteiler auf dem infolge des verstreuten, meist feuchten Grünfutters glatten Futtertisch ist ein großes Problem. Um einen schweren bzw. mit einem Silageblock belasteten Futterverteiler auch mittels eines leichten Hof- und Pflegeschleppers sicher manövrieren zu können, wird vorgeschlagen, daß die Rollen des Anbaugestells bzw. der Räum- und/oder Traganordnung in Abhängigkeit vom Querversatz des angebauten Futterverteilers bezüglich des Schleppers selbsttätig in eine den Querversatz vermindernde Richtung lenkbar sind.

Bei Schleppern haben die Zapfwellen an der Front- und Heckseite häufig eine unterschiedliche Drehrichtung. In diesem Zusammenhang ist es schon bekannt, einen Futterverteiler nach vorheriger Demontage der beiden Trommeln 180° um die Trommelachse zu drehen und wieder anzubauen (Zeitschrift "Profi", Nr. 6/1993, Seite 36). Dazu bedarf es aber einer bezüglich der Horizontalebene spiegelbildlichen Ausbildung des Anbaugestells, dessen nach unten ragender Anbaubock stört. Geht man davon aus, daß die Verteilwalze eine Lageranordnung mit einem T-Getriebe und einer mit dessen Gehäuse fest verbundenen, von einer Antriebswelle durchsetzten Traghülse aufweist, so wird als vorteilhaftere Lösung vorgeschlagen, daß die Traghülse in einem einen Teil des Anbaugestells oder des Schwenkgestells bildenden Tragrohr um 180° drehbar gelagert und verriegelbar ist. Das Anbaugestell braucht also nicht speziell spiegelbildlich gestaltet zu sein. Vor allem aber kann der Umbau auf die andere Antriebsdrehrichtung schneller und einfacher vonstatten gehen.

Ausführungsbeispiele der Erfindung werden nachfolgend anhand der Zeichnung erläutert. Im einzelnen zeigt
- Fig. 1: eine Seitenansicht eines einfachen Futterverteilers, der vorzugsweise zum Einlagern von Siliergut in ein Fahrsilo verwendet wird,
- Fig. 2: die Draufsicht des Futterverteilers nach Fig. 1,
- Fig. 3: in größerem Maßstab eine Seitenansicht eines Futterverteilers zum Verteilen von Grünfutter auf dem Futtertisch einer Stallung,
- Fig. 4: eine Seitenansicht eines Futterverteilers, der sowohl zum Zerteilen eines Silageblocks und zum Verteilen der Silage als auch zum Verteilen von Grünfutter verwendet werden kann,
- Fig. 5: eine weitere Seitenansicht des Futterverteilers nach Fig. 4 in einer Arbeitsstellung mit hoch geschwenkter Verteilwalze,
- Fig. 6: eine Verstellvorrichtung an dem Futterverteiler nach Fig. 4 in größerem Maßstab,
- Fig. 7: die Frontansicht des Futterverteilers nach Fig. 4 (entgegen der Schlepperfahrtrichtung),
- Fig. 8: einen Querschnitt VIII-VIII der Verteilwalze nach Fig. 7,
- Fig. 9: einen Teilschnitt IX-IX der Verteilwalze nach Fig. 8,
- Fig. 10: einen Querschnitt des Zinkenträgers des Futterverteilers nach Fig. 4 mit schwenkbarer Räumleiste,
- Fig. 11: eine Einzelheit der Frontansicht eines anderen Futterverteilers mit Kratzzinken an den inneren Leitschaufeln,
- Fig. 12: einen Querschnitt einer Verteilwalze mit einer besonderen Lageranordnung, mit deren Hilfe die Antriebsdrehrichtung gewechselt werden kann,
- Fig. 13: eine axiale Ansicht einer Verteilwalze in größerem Maßstab und
- Fig. 14: die Abwicklung der beiden Trommeln der Verteilwalze nach Fig. 13.

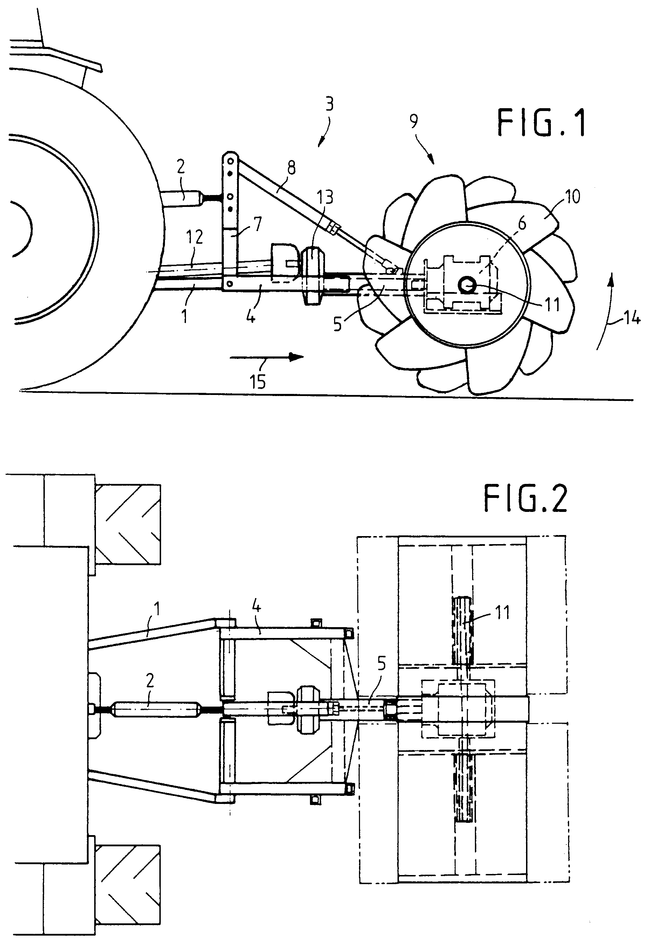

Der Futterverteiler nach den Figuren 1 und 2 ist an der Dreipunktaufhängung am Heck eines Schleppers angebracht. Diese besteht wie üblich aus zwei anhebbaren Unterlenkern 1 und einem Oberlenker 2. Das Anbaugestell 3 besteht aus einem horizontalen gabelartigen Rahmenteil. Die mit den Unterlenkern gelenkig verbundenen Gabelschenkel sind mit 4 bezeichnet. Den Stil der Gabel bildet ein Tragarm 5, der mit dem Gehäuse eines T-Getriebes 6 fest verbunden und von einer Antriebswelle durchsetzt ist. Zum Anbaugestell gehört ferner ein Dreieckbock 7, der sowohl mit den Unterlenker-Aufnahmegelenken als auch mit dem Oberlenker 2 verbunden ist. Eine längeneinstellbare Strebe 8 verbindet das obere Ende des Dreieckbockes 7 mit dem Tragarm 5 und hält damit das ganze Gerät in der Horizontalen. Die Verteilwalze 9 besteht aus zwei mit Leitschaufeln 10 besetzten Trommeln, die auf eine durch das T-Getriebe 6 durchgesteckte Sechskantwelle 11 aufgesteckt sind.

Die Verteilwalze 9 wird über eine Gelenkwelle 12 und ein Zwischengetriebe 13 von der Zapfwelle des Schleppers aus angetrieben. Die Drehrichtung der Verteilwalze ist durch einen Pfeil 14 und die vorwiegende Arbeits-Fahrtrichtung durch einen Pfeil 15 angegeben.

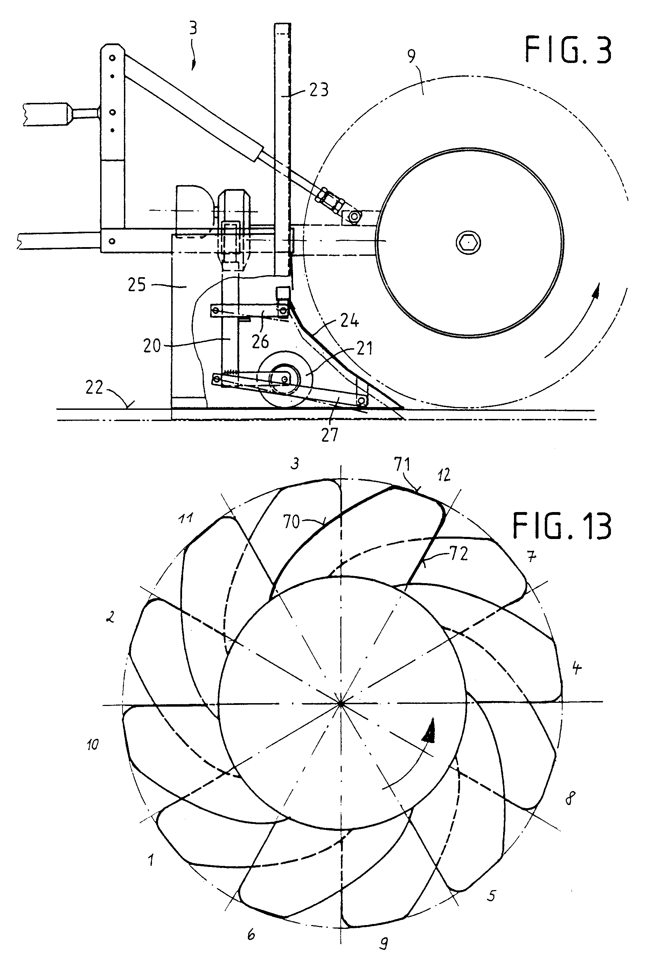

Der Futterverteiler nach Fig. 3, dessen Verteilwalze vereinfacht dargestellt ist, zeigt zwei Ergänzungen. Zum einen ist das Anbaugestell 3 durch zwei Stützen 20, an denen je eine Rolle 21 gelagert ist, auf dem Boden abgestützt. Die Höhe des Anbaugestells kann an der Stütze fein eingestellt werden und damit auch der Abstand der Verteilwalze von der Oberfläche des Futtertischs 22. Zum anderen ist ein zweiteiliger Räumschild vorgesehen. Er umfaßt eine am Anbaugestell 3 befestigte vertikale Wand 23 hinter der Verteilwalze, und einen beweglichen Unterteil aus einer die Walze untergreifenden Schrägfläche 24 und zwei Seitenwänden 25. Diese liegen etwa in der Ebene der äußeren Stirnflächen der Trommeln und bilden mit der Schrägfläche eine kastenartige Struktur. Die gemäß Fig. 3 dem Betrachter zugewandte Seitenwand 25 ist zum Teil weggebrochen um die dahinter liegende, an jeder Seite des Futterverteilers einmal vorkommende Aufhängung deutlicher zu zeigen. Sie besteht aus zwei nahezu horizontalen Hebeln 26 und 27, wobei der untere 27 länger ist. Beide Hebel sind links an der Stütze 20 und mit ihren rechten Enden an der Unterseite der Schrägfläche 24 um horizontale Achsen schwenkbar aufgenommen. Der Räumschildunterteil kann sich somit bei unveränderter Höhenlage des Anbaugestells 3 und der Verteilwalze auf den Futtertisch auflegen und, wie strichpunktiert angedeutet ist, dessen Unebenheiten folgen.

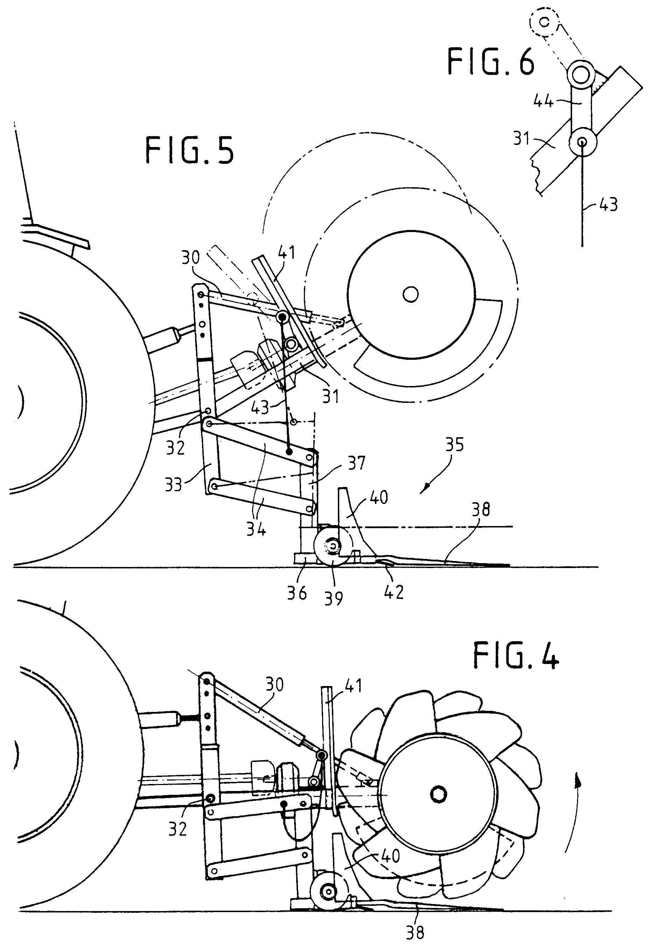

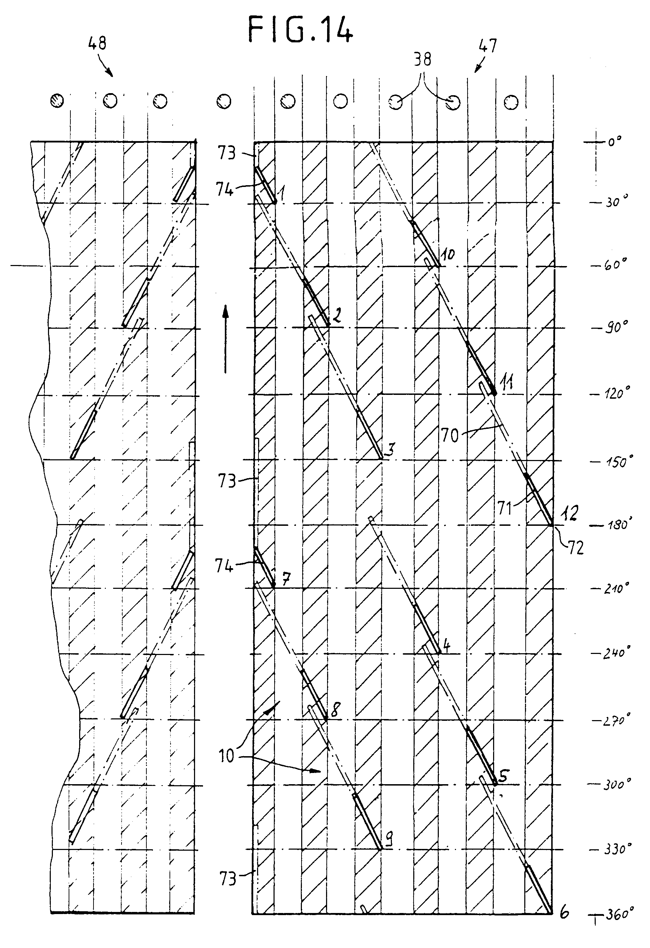

Nachstehend wird ein Futterverteiler beschrieben, der in den Figuren 4 bis 11 dargestellt ist. Die Verteilwalze wird abschließend anhand der Figuren 13 und 14 näher beschrieben.

Dieser Futterverteiler hat keine Abstützung gegenüber dem Futtertisch. Anstelle der nur in geringem Maße längenverstellbaren Strebe 8 gemäß Fig. 1 ist ein Hydraulikzylinder 30 vorgesehen und der gabelartige horizontale Teil des dort beschriebenen Anbaugestells 3 wird hier als Schwenkgestell 31 bezeichnet. Es ist an den Gelenkpunkten 32 der Unterlenker schwenkbar angebracht und kann beim Einfahren des Kolbens des Hydraulikzylinders 30 nach oben geschwenkt werden, wie Fig. 5 zeigt. Der Dreieckbock hat zu beiden Seiten nach unten ragende Verlängerungen 33, an denen mit verhältnismäßig langen Parallelhebeln 34 eine Traggabel 35 frei höhenbeweglich aufgehängt ist.

Die Traggabel besteht aus einem querverlaufenden Zinkenträger 36, an welchem nach oben weisende Stiele 37 angebracht sind, an denen die Parallelhebel 34 mit ihren rechten Enden gelagert sind. An dem Zinkenträger 36 sind eine Reihe horizontaler, an der Wurzel leicht abgekröpfter Zinken 38 befestigt. An der Traggabel sind mehrere Rollen 39 gelagert, so daß sie auf dem Futtertisch verfahrbar und dadurch zur Aufnahme eines Silageblocks beträchtlichen Gewichts eingerichtet ist.

Auch dieser Futterverteiler hat einen Räumschild, der in einen Räumschildunterteil 40 und einen Räumschildoberteil 41 getrennt ist. Der Unterteil 40, dessen Schrägfläche steiler als die in Fig. 3 gezeigte Schrägfläche 24 verläuft, ist am Zinkenträger 36 befestigt. Der plattenförmige Oberteil 41 hingegen sitzt fest am Schwenkgestell 31. In der unteren Stellung der Verteilwalze gemäß Fig. 4 wirken die Räumschildteile zusammen.

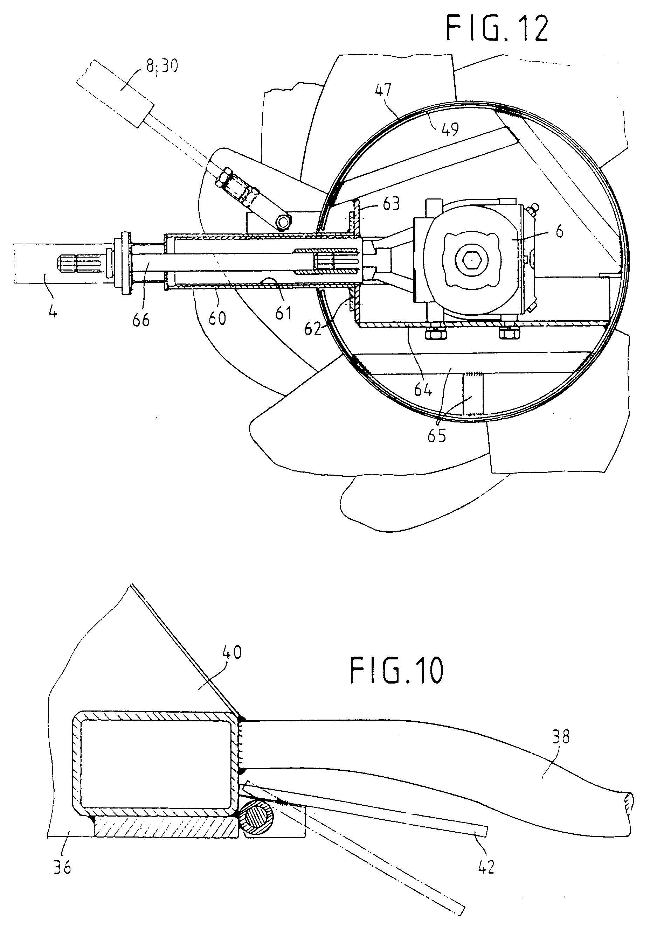

Obwohl sich die Traggabel 35 infolge ihrer freien Höhenbeweglichkeit auch Unebenheiten des Futtertischs anpassen kann, ist zur weiteren Verfeinerung der Anpassung an der Vorderkante des Zinkenträgers eine flache Räumleiste 42 auf und ab schwenkbar angelenkt. Dies ist in Fig. 10 dargestellt. Eine solche klappenartige Räumleiste 42 könnte übrigens auch an dem Räumschild gemäß Fig. 3 angebracht sein.

Um einen mit der Traggabel 35 aufgenommenen Silageblock auch auf unebenem Gelände transportieren zu können, ist es wünschenswert, die Traggabel anzuheben. Sie ist zu diesem Zweck mittels eines Zugstrangs 43, z. B. eines Drahtseils, an dem Schwenkgestell 31 aufgehängt. Das untere Ende des Zugstrangs 43 ist in diesem Beispiel am oberen Parallelhebel 34 befestigt. Wird das Schwenkgestell gemäß Fig. 5 in die mit ausgezogenen Strichen gezeichnete Stellung hochgeschwenkt, so spannt sich der Zugstrang 43, wie ebenfalls dargestellt. Wird schließlich das Schwenkgestell 31 mit der Verteilwalze noch ein Stück weiter in die strichpunktiert angedeutete Endstellung hochgeschwenkt, so wird die Traggabel 35 entsprechend in die strichpunktiert angedeutete Stellung angehoben.

Der Befestigungspunkt des Zugstrangs 43 am Schwenkgestell 31 ist mit Hilfe eines in Fig. 6 deutlicher dargestellten beidseitigen beidseitigen Stellhebels 44 veränderbar. Steht der am Schwenkgestell gelenkig angeordnete Stellhebel 44 in seiner strichpunktiert angedeuteten oberen Stellung, in welcher er verriegelt werden kann, so ergibt sich der maximale Abstand zwischen der Verteilwalze und der Traggabel wie in Fig. 5 gezeigt. Klappt man den Stellhebel 44 hingegen nach unten, so ist es möglich, die Verteilwalze bis zur Endstellung nach oben zu schwenken, wobei die Traggabel auf dem Boden verbleibt. Dadurch ist es möglich, noch höhere Silageblöcke zu verarbeiten.

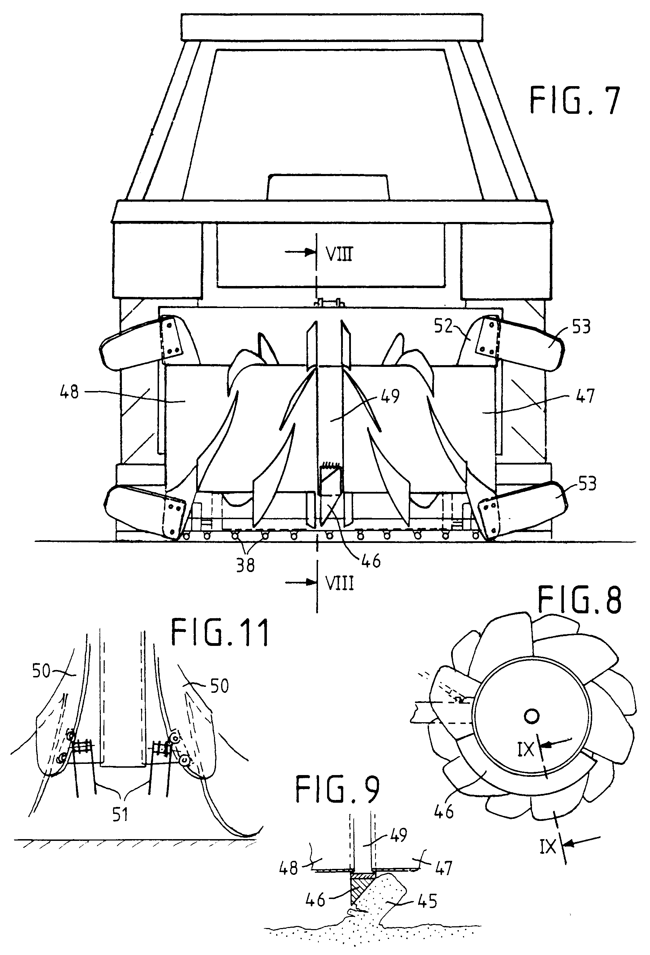

Anhand der Figuren 7, 8 und 9 wird die Ausgestaltung und Wirkungsweise eines Leitkörpers erläutert, der die Zerkleinerung des beim Abfräsen eines Siloblocks zurückbleibenden Dammes 45 zum Ziel hat. Der Leitkörper ist in diesem Beispiel als Ringsegment 46 ausgebildet, dessen keilförmiger Querschnitt sich insbesondere aus Fig. 9 aber auch aus Fig. 7 ergibt. Er könnte aber auch als Hohlkegelsektor ausgebildet sein.

Der Spalt zwischen den beiden Trommeln 47 und 48 der Verteilwalze ist durch eine Ringmuffe 49 abgedeckt. An die Unterseite dieser Ringmuffe ist das Ringsegment 46 mit seiner zylindrischen Innenfläche passend angesetzt. An der in den Figuren 7 und 9 linken Seite hat das Ringsegment 46 eine ebene Fläche, die in der radialen Stirnebene der Ringmuffe 49 liegt. Die andere Seitenfläche des Ringsegments 46 ist eine Kegelmantelfläche, die von der unteren Kante aus zur rechten Trommel 47 ansteigt. Wie in Fig. 9 angedeutet drückt das Ringsegment 46 beim Absenken der Verteilwalze den Damm 45 zur Seite, so daß er in den Bereich der rotierenden Leitschaufeln kommt und auf diese Weise anstandslos zerkleinert wird.

In Fig. 11 sind an Leitschaufeln 50 angeordnete federnde Kratzzinken 51 gezeigt, die als alternative Maßnahme ebenfalls zur Zerkleinerung des Dammes 45 dienen können, vor allem wenn dieser aus einem verhältnismäßig langhalmigen Siliergut besteht.

Figur 7 zeigt eine einfache und wirkungsvolle Maßnahme zur Verbreiterung der Verteiltrommel über die Breite des Schleppers hinaus. Hiernach sind an den vier äußeren Leitschaufeln 52 Verlängerungsschaufeln 53 angebracht. Der Vorteil besteht insbesondere darin, daß im Gegensatz zu bekannten, am Anbaugestell angebrachten seitlich ausstellbaren Abweisblechen der Querfördereffekt über die Schlepperräder hinaus nicht von der Fahrtrichtung abhängt.

Die in Fig. 12 gezeigte Lageranordnung hat die Besonderheit, daß der z. B. in Fig. 1 mit 5 bezeichnete Tragarm aus zwei ineinander gelagerten Teilen besteht, nämlich einem äußeren Tragrohr 60 und einer inneren Traghülse 61. Das Tragrohr 60 ist Bestandteil des Schwenkgestells bzw. des Anbaugestells und hat an seinem Ende einen Flansch 62. Die innere Traghülse 61 hat einen Flansch 63, an dem ein Tragblech 64 für das Gehäuse des T-Getriebes 6 angebracht ist. Die Anordnung ist von der Ringmuffe 49 umschlossen, welche mit Hilfe verschiedener Streben 65 ausgesteift und mit dem Flansch 63 und dem Tragblech 64 zu einer Einheit verbunden ist. Somit ist es möglich, nach Abnehmen der Trommeln und vorzugsweise nach Herausziehen der Sechskantwelle die ganze Lageranordnung, auch bei arretierter Antriebswelle 66, mittels der Traghülse 61 im Tragrohr 60 zu drehen. Zur Arretierung in der gewendeten Stellung werden die beiden Flansche 62 und 63 durch Schrauben wieder verbunden.

In der Ansicht nach Fig. 13 sind sämtliche 12 Leitschaufeln der dargestellten Trommel sichtbar. Der Zuschnitt der Leitschaufeln ist so gewählt, daß beispielsweise bei der dick umrandeten Leitschaufel eine vorauslaufende Partie und eine nachlaufende Partie unterschiedlicher Höhe zu unterscheiden ist.

Der Rand 70 der vorauslaufenden Partie steigt vom Trommelmantel schräg auf die maximale radiale Höhe an. Der Rand 71 der nachlaufenden Partie bleibt auf dieser Höhe. Der hintere Rand 72 der Leitschaufel fällt radial oder nahezu radial auf den Trommelmantel ab.

Fig. 14 zeigt in schematischer Darstellung die Abwicklung der Trommel 47 und einen Teil der Abwicklung der Trommel 48. Es sind verschiedene in Achsrichtung aufeinanderfolgende streifenförmige Umfangsbereiche zu unterscheiden. Die schraffierten Bereiche sind diejenigen, in denen sich die hohen nachlaufenden Partien der Leitschaufeln befinden. In den nicht schraffierten Bereichen hingegen befinden sich nur vorauslaufende niedrigere Leitschaufelpartien. Zwischen den beiden Trommeln befinden sich gar keine Leitschaufeln. Dies ist der Bereich der Ringmuffe 49. Hier und in den nicht schraffierten Bereichen ist es bei dieser Leitschaufelanordnung möglich, Zinken 38 unter der Verteilwalze anzubringen und dabei zu erreichen, daß die nachlaufenden hohen Leitschaufelpartien zwischen die Zinken eingreifen und bis nahezu auf den Futtertisch herabreichen. In Fig. 7 ist das Eingreifen der äußeren Leitschaufeln unter die Zinken 38 erkennbar. Die Leitschaufeln sind in zwei Wendelgängen angeordnet, deren Anfänge und Enden an den Stirnflächen der Trommel um 180° versetzt gegeneinander angeordnet sind. Zur besseren Orientierung sind im rechten Teil der Fig. 14 und in Fig. 13 die Schaufeln mit 1 bis 12 numeriert. Die Schaufeln 1 bis 6 bilden den ersten und die Schaufeln 7 bis 12 den zweiten Wendelgang. Um zu erreichen, daß alle Schaufeln in Umfangsrichtung gegeneinander beabstandet sind und zwar in gleichen Bogenabständen, wurde zwischen den Schaufeln 3 und 4 und den Schaufeln 9 und 10 eine Lücke von 30° gelassen. Bei einer ungeraden Anzahl von Schaufeln pro Wendelgang entfällt diese Lücke.

Die beiden Leitschaufeln an der Innenseite jeder Trommel haben eine besondere Form. Bei ihnen ist die vorauslaufende Partie 73 gegenüber der nachlaufenden Partie 74 (Fig. 14) abgekantet. Die vorauslaufende Partie 73 verläuft parallel zum Trommelrand, d.h. in der Radialebene, während die nachlaufende Partie die Richtung der übrigen Leitschaufeln aufnimmt. Die vorauslaufende Partie dieser Leitschaufeln trägt wesentlich zur Erhöhung der Wirksamkeit des vorbeschriebenen Ringsegments 46 bei, da es den umgeknickten Damm 45 sofort erfaßt.
- 1: Unterlenker
- 2: Oberlenker
- 3: Anbaugestell
- 4: Gabelschenkel
- 5: Tragarm
- 6: T-Getriebe
- 7: Dreieckbock
- 8: Strebe
- 9: Verteilwalze
- 10: Leitschaufel
- 11: Sechskantwelle
- 12: Gelenkwelle
- 13: Zwischengetriebe
- 14: Drehrichtung
- 15: Arbeits-Fahrtrichtung
- 20: Stütze
- 21: Rolle
- 22: Futtertisch
- 23: Wand
- 24: Schrägfläche
- 25: Seitenwand
- 26: Hebel
- 27: Hebel
- 30: Hydraulikzylinder
- 31: Schwenkgestell
- 32: Gelenkpunkt
- 33: Verlängerung
- 34: Parallelhebel
- 35: Traggabel
- 36: Zinkenträger
- 37: Stiel
- 38: Zinke
- 39: Rolle
- 40: Räumschildunterteil
- 41: Räumschildoberteil
- 42: Räumleiste
- 43: Zugstrang
- 44: Stellhebel
- 45: Damm
- 46: Ringsegment
- 47: Trommel
- 48: Trommel
- 49: Ringmuffe
- 50: Leitschaufel
- 51: Kratzzinken
- 52: Leitschaufel
- 53: Verlängerungsschaufel
- 60: Tragrohr
- 61: Traghülse
- 62: Flansch
- 63: Flansch
- 64: Tragblech
- 65: Streben
- 66: Antriebswelle
- 70: Rand
- 71: Rand
- 72: Rand
- 73: vorauslanfende Partie
- 74: nachlaufende Partie

## Patentansprüche

1. Futterverteiler mit einem an der Dreipunktaufhängung eines Schleppers anbringbaren Anbaugestell (3) und einer an diesem mittig gelagerten, aus zwei mit Leitschaufeln (10) besetzten Trommeln bestehenden horizontalen Verteilwalze (9), wobei die Leitschaufeln (10) in Form mehrerer gedachter Wendelgänge auf den Trommeln (47, 48) so angeordnet sind, daß die einander entsprechenden Leitschaufeln der einzelnen Wendelgänge in Umfangsrichtung fluchten und daß sämtliche Leitschaufeln einer Trommel in Umfangsrichtung um die gleichen Bogenabstände gegeneinander versetzt sind, dadurch gekennzeichnet, daß die Leitschaufeln eine von der Mantelfläche der Trommel auf eine bestimmte radiale Maximalhöhe schräg ansteigende, in Drehrichtung vorauslaufende Partie (70) und eine nachlaufende Partie (71) aufweist, die durchweg diese Maximalhöhe hat und am Ende steil abfällt.

2. Futterverteiler nach Anspruch 1, dadurch gekennzeichnet, daß die der Mitte der Verteilwalze unmittelbar benachbarten inneren Leitschaufeln mit ihrer vorauslaufenden Partie (73) am Trommelrand in der Radialebene angeordnet und die nachlaufenden, Maximalhöhe aufweisenden Partien (74) gegenüber den vorauslaufenden in Richtung der übrigen Leitschaufeln abgekantet sind.

3. Futterverteiler nach Anspruch 1, dadurch gekennzeichnet, daß an der Unterseite der Lageranordnung der Verteilwalze zwischen den Trommeln ein Leitkörper angebracht ist, der eine zu einer Radialebene der Trommeln geneigte Leitfläche aufweist.

4. Futterverteiler nach Anspruch 3, dadurch gekennzeichnet, daß die Lageranordnung von einer den Spalt zwischen den Trommeln (47, 48) abdeckenden Ringmuffe (49) umgeben ist und daß an diese als Leitkörper ein Ringsegment (46) von keilförmigem Querschnitt angesetzt ist.

5. Futterverteiler nach Anspruch 1, dadurch gekennzeichnet, daß Verlängerungsschaufeln (53) vorgesehen sind, welche an die äußeren Leitschaufeln anschraubbar sind und diese über die Schlepperbreite hinaus verlängern.

6. Futterverteiler nach Anspruch 1, dadurch gekennzeichnet, daß eine auf dem Boden aufliegende, die Verteilwalze untergreifende Räum- und/oder Traganordnung (24; 35) an dem Anbaugestell (3) frei höhenbeweglich geführt ist.

7. Futterverteiler nach Anspruch 6, dadurch gekennzeichnet, daß die Räum- und/oder Traganordnung mit Hilfe mehrerer Schwenkhebel (26, 27; 37) bezüglich des Anbaugestells im wesentlichen parallel geführt ist.

8. Futterverteiler nach Anspruch 6 oder 7, dadurch gekennzeichnet, daß das Anbaugestell, an dem ein Räumschild (23, 24, 25) frei höhenbeweglich geführt ist, durch auf dem Boden laufende Rollen (21) in seiner Bewegungsmöglichkeit nach unten begrenzt ist.

9. Futterverteiler nach einem der Ansprüche 6 bis 8, dadurch gekennzeichnet, daß an dem Anbaugestell eine horizontale Silageblock-Traggabel (35) frei höhenbeweglich geführt und durch an ihr gelagerte, auf dem Boden laufende Rollen (39) in ihrer Bewegungsmöglichkeit nach unten begrenzt ist.

10. Futterverteiler nach Anspruch 1, dadurch gekennzeichnet, daß die Verteilwalze mittels eines gabelartigen Schwenkgestells (31) an dem Anbaugestell auf und ab schwenkbar gelagert und mittels eines Hydraulikzylinders (30) in eine gewünschte Schwenkstellung einstellbar ist.

11. Futterverteiler nach Anspruch 9 oder 10, dadurch gekennzeichnet, daß die Silageblock-Traggabel (35) mittels eines Zugstrangs (43) mit dem Schwenkgestell (31) verbunden und dadurch beim Hochschwenken über eine bestimmte Schwenkstellung hinaus vom Boden abhebbar ist.

12. Futterverteiler nach Anspruch 1, dadurch gekennzeichnet, daß die Verteilwalze eine Lageranordnung mit einem T-Getriebe (6) und einer mit dessen Gehäuse fest verbundenen von einer Antriebswelle (66) durchsetzten Traghülse (61) aufweist und daß die Traghülse in einem einen Teil des Anbaugestells oder des Schwenkgestells bildenden Tragrohr (60) um 180° drehbar gelagert und verriegelbar ist.

## Claims

1. Feed distributor comprising an attachment frame (3) that can be mounted on the three-point suspension of a tractor and a horizontal distributor roll (9), journalled centrally on this frame and consisting of two drums equipped with guide blades (10), wherein the guide blades (10) are so disposed in the form of a plurality of imaginary helical turns on the drums (47, 48) that the mutually corresponding guide blades of the individual helical turns are aligned in the circumferential direction and that all the guide blades of one drum are spaced apart circumferentially by equal angles of arc, characterized in that the guide blades have a leading part (70), ascending steeply from the cylindrical surface of the drum to a specific radial maximum height, and a following part (71), as considered in the rotational direction, which has this maximum height throughout and falls away steeply at the end.

2. Feed distributor according to claim 1, characterized in that the inner guide blades immediately adjacent to the centre of the distributor roll are disposed with their leading part (73) at the edge of the drum in the radial plane and the following parts (74), having maximum height, are angled relative to the leading parts towards the other guide blades.

3. Feed distributor according to claim 1, characterized in that, on the under side of the bearing assembly of the distributor roll, a guide body is mounted between the drums, which possesses a guide surface inclined to a radial plane of the drums.

4. Feed distributor according to claim 3, characterized in that the bearing assembly is surrounded by an annular sleeve (49), covering the gap between the drums (47, 48), and that a ring segment (46) of wedge-shaped cross-section is mounted as guide body on this sleeve.

5. Feed distributor according to claim 1, characterized in that extension blades (53) are provided, which can be screwed on to the outer guide blades and extend them beyond the width of the tractor.

6. Feed distributor according to claim 1, characterized in that a clearing and/or carrying assembly (24; 35), resting on the ground and penetrating beneath the distributor roll, is guided freely movable in height on the attachment frame (3).

7. Feed distributor according to claim 6, characterized in that the clearing and/or carrying assembly is guided substantially parallel with respect to the attachment frame by means of a plurality of pivoting levers (26, 27; 37).

8. Feed distributor according to claim 6 or 7, characterized in that the attachment frame, on which a clearing shield (23, 24, 25) is guided freely movable in height, is limited in its downward movement by rollers (21) running on the ground.

9. Feed distributor according to one of claims 6 to 8, characterized in that a horizontal silage block carrying fork (35) is guided freely movable in height on the attachment frame, and is limited in its downward movement by rollers (39), mounted on it and running on the ground.

10. Feed distributor according to claim 1, characterized in that the distributor roll is mounted pivotally upwards and downwards on the attachment frame by means of a fork-like pivoting frame (31) and can be adjusted to a desired pivoted position by means of a hydraulic cylinder (30).

11. Feed distributor according to claim 9 or 10, characterized in that the silage block carrying fork (35) is connected by means of a pulling rope (43) to the pivoting frame (31) and in this way, as the latter is pivoted upwards beyond a specific pivoted position, can be lifted off the ground.

12. Feed distributor according to claim 1, characterized in that the distributor roll has a bearing assembly comprising a T-gear (6) and a support sleeve (61) firmly connected to the gear casing and through which a drive shaft (66) passes, and that the support sleeve is rotatably journalled through 180° and able to be locked in a support tube (60) forming a part of the attachment frame or the pivoting frame.

## Revendications

1. Distributeur de fourrage comportant un bâti (3) pouvant être monté sur la suspension à trois points d'un tracteur, et un rouleau distributeur (9) horizontal, monté centralement par rapport au bâti, et comportant deux tambours munis d'aubes directrices (10), les aubes directrices (10) étant agencées sur les tambours (47,48) sous forme de plusieurs pas d'hélices imaginaires de sorte que les aubes directrices qui se correspondent, des pas d'hélices individuels, sont alignées en direction périphérique, et que toutes les aubes directrices d'un tambour sont décalées en direction périphérique des mêmes écartements d'arcs,
caractérisé en ce que les aubes directrices présentent, dans le sens de rotation, une partie d'attaque (70), inclinée et s'élevant de la face d'enveloppe du tambour à une hauteur radiale maximale déterminée, et une partie de fuite (71) qui conserve cette hauteur maximale et tombe de façon raide à l'extrémité.

2. Distributeur de fourrage selon la revendication 1,
caractérisé en ce que les aubes directrices internes, directement adjacentes du centre du rouleau distributeur, sont agencées avec leurs parties d'attaque (73) sur le bord du tambour dans le plan radial, et les parties de fuite (74) présentant la hauteur maximale sont pliées par rapport aux parties d'attaque, vers les autres aubes directrices.

3. Distributeur de fourrage selon la revendication 1,
caractérisé en ce que, sur la face inférieure de l'agencement de paliers de l'arbre distributeur, entre les tambours, est agencé un corps directeur qui présente une face directrice, inclinée vers un plan radial des tambours.

4. Distributeur de fourrage selon la revendication 3,
caractérisé en ce que l'agencement de paliers est entouré d'un manchon annulaire (49) recouvrant la fente entre les tambours (47,48), et en ce qu'un segment annulaire (46) de section transversale cunéiforme est raccordé à celui-ci, comme corps directeur.

5. Distributeur de fourrage selon la revendication 1,
caractérisé en ce que l'on prévoit des aubes de prolongement (53), qui peuvent être vissées sur les aubes directrices externes et prolongent celles-ci au-delà de la largeur du tracteur.

6. Distributeur de fourrage selon la revendication 1,
caractérisé en ce qu'un dispositif de raclement et/ou porteur, reposant sur le sol et agencé sous le rouleau distributeur, est guidé sur le bâti (3), de façon à pouvoir être déplacé librement en hauteur.

7. Distributeur de fourrage selon la revendication 6,
caractérisé en ce que le dispositif de raclement et/ou porteur est guidé essentiellement de façon parallèle, par rapport au bâti, à l'aide de plusieurs leviers pivotants (26,27;37).

8. Distributeur de fourrage selon l'une des revendications 6 ou 7,
caractérisé en ce que le bâti, sur lequel est guidé un disque de raclement (23,24,25) pouvant être déplacé librement en hauteur, est limité vers le bas dans sa possibilité de mouvement, par des galets (21) se déplaçant sur le sol.

9. Distributeur de fourrage selon l'une des revendications 6 à 8,
caractérisé en ce que sur le bâti est guidée une fourche porteuse (35) pour fourrage ensilé, horizontale et pouvant être déplacée librement en hauteur, et elle est limitée, dans sa possibilité de mouvement vers le bas, par des galets (39) montés sur elle et se déplaçant sur le sol.

10. Distributeur de fourrage selon la revendication 1,
caractérisé en ce que le rouleau distributeur est monté sur le bâti, de façon à pouvoir être pivoté vers le bas et vers le haut, au moyen d'un bâti de pivotement (31) en forme de fourche, et peut être réglé, au moyen d'un vérin (30), dans une position de pivotement souhaitée.

11. Distributeur de fourrage selon l'une des revendications 9 ou 10,
caractérisé en ce que la fourche porteuse (35) pour fourrage ensilé est reliée au bâti de pivotement (31) au moyen d'un câble de traction (43), et peut ainsi être soulevée du sol, lors du pivotement vers le haut, au-dessus d'une position de pivotement déterminée.

12. Distributeur de fourrage selon la revendication 1,
caractérisé en ce que le rouleau distributeur comporte un agencement de paliers présentant une transmission (6) en forme de T et une douille porteuse (61) solidaire de son boîtier et traversée par un arbre d'entraînement (66), et en ce que la douille porteuse est montée de façon à pouvoir tourner de 180° et peut être verrouillée, dans un tube porteur (60) formant une partie du bâti ou du bâti de pivotement.
